# EUROPEAN PATENT APPLICATION

(11) **EP 2 147 899 A1**
(43) Date of publication of application: **27.01.2010**
(21) Application number: 09164934.3
(22) Date of filing: 08.07.2009
(51) Int. Cl.: C03B 33/02, C03B 33/07, C03B 33/09, C03B 33/03, B28D 5/00

(54) **Method for processing terminal in bonded substrate**

(30) Priority: 18.07.2008 JP 2008186783
(71) Applicant: Mitsuboshi Diamond Industrial Co., Ltd., Suita-city, Osaka Pref. 564-0044 (JP)
(72) Inventor: Sunata, Tomihisa, Suita-city Osaka 564-0044 (JP); Shimizu, Seiji, Suita-city Osaka 564-0044 (JP); Otoda, Kenji, Suita-city Osaka 564-0044 (JP)
(74) Representative: TBK-Patent

(57) **Abstract**

Object To provide a method for processing a terminal through a laser breaking process according to which processing is carried out along a line, not a curve, even when the exposed width is small, so that the terminal can be processed without fail.

Means for Achieving Object In a method for processing a terminal in a bonded substrate according to which a first divided surface B2, B3 is created in a first substrate 31 and a second substrate 34, so that the cut surfaces are in the same plane, and after that, the portion of the first substrate which covers a terminal 33 is removed from the first divided surface of the first substrate as an end piece 35 with a width of 10 mm or less, so that a second divided surface B1 is created and the terminal is exposed, a first scribe line S1, a second scribe line S2 and a third scribe line S3 are created through a laser scribing process, and then, a breaking process is carried out along the second scribe line S2 and the third scribe line S3, so that the first divided surface B2, B3 is created, and then, a laser breaking process is carried out along the first scribe line S1 and the end piece 35 is removed.

## Description

### Technical Field

The present invention relates to a method for processing a terminal according to which a portion of a bonded substrate made of a brittle material (also referred to as end piece, edge or connection portion) is removed, so that a terminal for electrical connection to an external apparatus is exposed.
Here, bonded substrate made of a brittle material is refers to a bonded substrate made of such materials as glass, single crystal silicon, semiconductor wafers, sapphire or ceramic.

### Background Technology

In the following description, "scribe line" refers to a crack with a certain depth which is created in advance along a line along which the substrate is to be divided before the substrate is divided.
In addition, "breaking process" refers to a process for dividing a substrate.
When a breaking process is carried out along a scribe line, the initial crack with a certain depth expands to the rear of the substrate. As a result, the substrate is completely divided.

In addition, "laser scribing process" refers to a process in which a line along which the substrate is to be divided is set on a brittle material substrate, and the substrate is scanned with a laser beam spot (region irradiated with laser beam and heated) along this line along which the substrate is to be divided, so that the substrate is heated to its softening temperature or lower, and then, the substrate is cooled along the beam spot's path, so that a scribe line (crack with a certain depth) is created along the line along which the substrate is to be divided on the surface of the substrate as a result of thermal stress.

In addition, "laser breaking process" refers to a process in which the substrate is scanned with a laser beam spot along the scribe line that is created in advance, so that the substrate is again heated (the substrate may be cooled again after reheating if necessary), and thus, the scribe line (crack with a certain depth) expands in the direction of the depth as a result of thermal stress and reaches the rear surface of the substrate, and the substrate is divided.

Here, "laser scribing through multiple photon absorption" described below as a prior art technology is a processing technology for substrates according to which a laser beam is focused inside a substrate so that the quality improves inside the substrate without creating a scribe line on the surface, and thus, the processing mechanism is different from the above "laser scribing process" and "laser breaking process," and the term is used distinctly from "laser scribing process" and "laser breaking process."

Brittle material substrates, such as glass substrates, are processed to appropriate sizes and forms for various products.
In the manufacture of liquid crystal display panels, for example, two glass substrates having a large area (mother substrates) are used to form a bonded substrate where a color filter (CF) pattern is formed on one substrate, and TFT's (thin film transistors) for driving the liquid crystal and terminals for external connection are patterned on the other substrate, and the two substrates are pasted together. After that, a process for dividing the bonded substrate into individual unit display substrates is carried out, so that liquid crystal display panels are manufactured.

In this process for dividing a mother substrate into unit display substrates, a cutter wheel is pressed against and rolled over the two substrates so that scribe lines are created, and then, bend moment is applied from the rear of the substrates along the scribe lines, and thus, a conventional breaking process is carried out. As a result, the bonded substrate is divided into unit display substrates.

Incidentally, when a first substrate (CF substrate) on the side where color filters are formed and a second substrate (TFT substrate) on the side where TFT's and terminals connected to these TFT's are formed are pasted together, the surface of the second substrate, where TFT's and terminals are formed, is covered by the first substrate in the bonded substrates for liquid crystal display panels described above.

The terminals are in a region for connecting signal lines between the TFT's and an external apparatus, and therefore, it is necessary to expose the terminals, so that signal lines can be connected. Therefore, when a bonded substrate having a large area is divided into unit display substrates, the portion of the first substrate (CF substrate) facing the terminals is divided along the outer end of the terminals on the side opposite to the side where TFT's are connected (that is to say, the end of the unit display substrate), and thus, an end piece with such a width as to make attachment of at least signal lines connected to an external apparatus possible can be removed at the outer end of the terminals.

A process for cutting a terminal is carried out by creating scribe lines at the two ends of the terminal and carrying out a breaking process along these scribe lines.
In this case, there is a method for processing a terminal in a bonded substrate, in which the order in which the scribe lines are created using a cuter wheel and the order in which a breaking process is carried out using a breaking unit can be adjusted, and thus, the process is easy to carry out (see Patent Document 1).

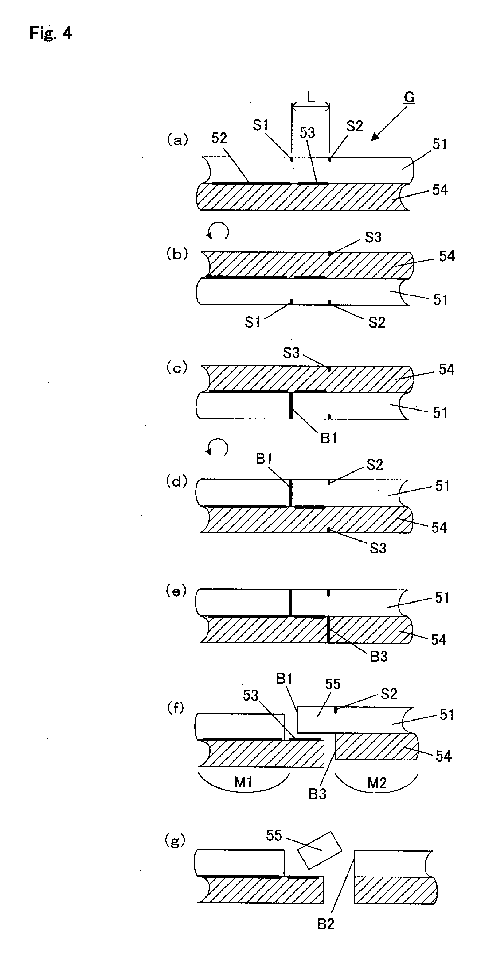

Patent Document 1 discloses that a bonded substrate is processed in the following steps (1) to (5), as shown in Fig 4, and thus, defective breaking can be prevented in the processing for a terminal.
(1) First and second scribe lines S1 and S2 are created in the first substrate 51 (CF substrate) with the distance corresponding to the width (L) of the end piece (edge) facing the terminal 53 of the second substrate 54 (TFT substrate) (Fig 4(a)).
(2) A third scribe line S3 is created in the location of the second substrate 54 where the second scribe line S2 extends from the rear of the first substrate, and after that, the first substrate 51 is broken along the first scribe line S1 (Figs 4(b) to 4(d)).
(3) The second substrate 54 is broken along the third scribe line S3 (Fig 4(e)).
(4) The first substrate 51 and the second substrate 54 are cut along the divided surface B1 of the first substrate 51 along the first scribe line S1 and along the divided surface B3 along the third scribe line S3 (Fig 4(f)).
(5) The first substrate is broken along the second scribe line S2 so that the end piece (edge) 55 that is left on the first substrate 51 is removed from the divided surface B2 (Fig 4(g)).

The method for processing a terminal following the above described steps have both advantages and disadvantages.
An advantage of this method for processing a terminal is that the terminal can be linearly processed along the straight scribe line, even in the case where the width (L) of the end piece, which is the width between the first scribe line S1 and the second scribe line S2, is small (for example, 10 mm or less).

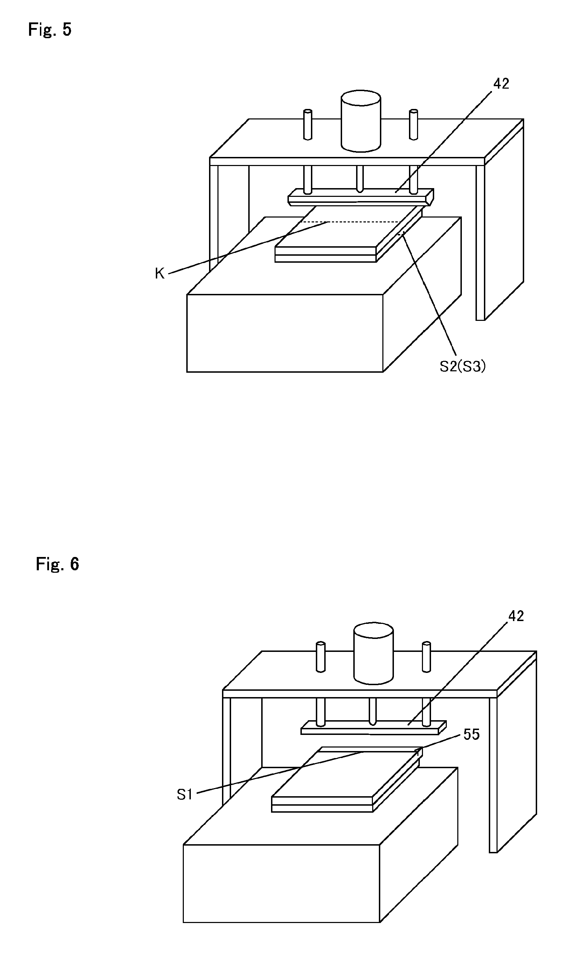

Meanwhile, the following points can be cited as disadvantages. First, it is necessary to use two different types of breaking apparatuses (bend moment type, shearing type) for the breaking process. That is to say, a breaking apparatus for applying bend moment by pressing a break bar 42 against the substrate along line K (line in same place as scribe lines S2 and S3 on the rear side) with contact being made at an acute angle is used, as shown in Fig 5, in order to create the divided surface B1 and the divided surface B3 in Figs 4(c) and 4(e). In contrast, a special breaking apparatus for applying a shearing force of pressure with which a break bar 42 is pressed against the end piece (edge) 55 through a contact plane, as shown in Fig 6, is used in order to create the divided surface B2 in Fig 4(g).

Second, carets are easily made when scribe lines S1 to S3 are created using a cutter wheel in comparison with a laser scribing process. There is a risk that carets may affect the yield, and therefore, as few carets as possible should be made. Thus, it is desirable to create a scribe line in a laser process in order to reduce the number of carets.

Third, the end piece (edge) 55 of the first substrate 51 and the end portion 53 of the second substrate 54 are separated so that a unit display substrate M1 and a substrate M2 are formed in Fig 4(f), and at this time, the end piece (edge) 55 that has covered the terminal 53 is separated from the unit display substrate M1, and thus, the terminal 53 is exposed.
The unit display substrate M1, in such a state that the terminal 53 is exposed in the step of Fig 4(f), is conveyed to the next step (for example, assembly line) and processed, bringing it one step closer to the finished product.

However, in the case where the substrate is conveyed to the next step in a state where the terminal 53 is exposed, there is a risk that the end surface of the terminal 53 may be scratched during the conveyance. In particular, in the case where the panel manufacturing line for the process up to Fig 4(g) and the assembly line for assembling products are at a distance from each other, it is necessary to protect the terminal 53 so that it is not scratched during conveyance, and thus, time and effort are required for the conveyance.
Because of these reasons, it is desirable for the end piece (edge) 55, which functions as a protective cover for the terminal 53, to be removed in the following step (assembly line in the above example).

Thus, there is a laser processing method according to which a mother substrate is first divided into unit display substrates (liquid crystal display panels) in such a state that the terminal is covered with an end piece (edge), and after that, the end piece is removed (see Patent Document 2).

According to the processing method in Patent Document 2, (1) a mother substrate is divided into unit display substrates (liquid crystal display panels), (2) and after that, the divided unit display substrates (liquid crystal display panels) are irradiated with a laser beam along the line along which the substrate is to be divided in order to expose a terminal, and thus, the end piece (cut piece in Patent Document 2) is separated as a result of multiple photon absorption so that the terminal is exposed. That is to say, the substrate is irradiated with a laser beam in such a manner that the beam is focused inside the substrate directly beneath the line along which the substrate is to be cut, and thus, multiple photons are absorbed and the quality of the inside of the substrate is improved. Thus, the end piece (cut piece) is separated along a plane originated from the quality improved region. This laser process is referred to as "laser scribing using multiple photon absorption."
Patent Document 1 Japanese Patent No. 3792508
Patent Document 2 Japanese Unexamined Patent Publication 2007-62074

### Disclosure of the Invention

### Problem to Be Solved by the Invention

In the case where the laser scribing using multiple photon absorption in Patent Document 2 is adopted, the following problems arise.
Multiple photon absorption through irradiation with a laser simply improves the quality, and in some cases it is difficult to completely cut the substrate in the position along the line along which processing is to be carried out. That is to say, even in the case where a crack is created in the quality improved region inside the substrate, the substrate is not cut unless the crack expands. In this case, a cutting process using a breaking apparatus becomes necessary. The terminal is directly beneath the end piece to be removed (cut piece), and therefore, a shearing type breaking apparatus cannot be used, and thus, the substrate is cut using a bend moment type breaking apparatus. It is necessary for bend moment type breaking apparatuses to be allowed to press the substrate from the rear in such a state that the two sides are equally supported with the line along which the substrate is to be cut in between. However, when the width of the end piece (cut piece) is small, the two sides cannot be equally supported and the substrate cannot be cut stably even when using a bend moment type breaking apparatus. Accordingly, in the case where the width of the end piece (cut piece) is smaller than 10 mm and the mother substrate is first divided into unit display substrates followed by a process for removing the end piece (cut piece), cutting defects easily occur, and in the case where the width is 5 mm or less, the cutting using a breaking apparatus itself becomes difficult. In addition, micro-cracks are created in the quality improved region, resulting from multiple photon absorption, and in the scribe line created using a cutter wheel, and therefore, the strength of the substrate at an end surface lowers. Furthermore, the end surface, from which the end piece is removed, is close to the terminal, and therefore, it is also difficult to remove micro-cracks through a polishing process or the like.

As described above, there are disadvantages with the terminal processing in both cases where a mechanical process using a cutter wheel is adopted and laser scribing using multiple photon absorption is adopted, and thus, a new method for processing a terminal has been desired.

Therefore, an object of the present invention is to provide a new method for processing a terminal according to which problems with the above described process for a terminal using a cutter wheel and the process for a terminal through laser scribing using multiple photon absorption are solved and processing is possible even when the width of the terminal that is exposed is 10 mm or less.

### Means for Solving Problem

The present invention is provided in order to solve the above described problems, and it provides a process for a terminal using a laser scribing process and a laser breaking process.
That is to say, the present invention provides a process which is carried out on a bonded substrate where a first brittle material substrate and a second brittle material substrate, where a terminal connected to a functional film is formed on one side together with a functional film, are pasted together in such a manner that the terminal is covered with the first substrate.
Here, "functional film" refers to TFTs for a liquid crystal display panel, but there is no special limitation as long as it is connected to a terminal formed on the surface of a substrate and has certain functions. It may be a thin film element other than a TFT, a resistance film or an optical film, for example.
"Terminal" refers to a region for connection of signal lines or power lines between a functional film and an external apparatus. In general, a conductive film (for example, a metal film or a transparent conductive film) is patterned. It is necessary for the terminal to be connected to an external apparatus, and therefore, the surface of the terminal is exposed with a width required for the connection to an external apparatus on at least the outer end of the terminal (end on the side opposite to the connection of the terminal to the functional film). Meanwhile, the smaller the width of the terminal is, the more the area that can be used as the functional film can be increased. Therefore, the lower limit of the width of the terminal that is exposed is a width which makes connection to an outer apparatus possible, and it is preferable for the upper limit of the width to be in a range of 10 mm or less. Concretely, it is preferable for the width of the terminal that is exposed to be approximately 2 mm to 8 mm.

In the method for processing a terminal according to the present invention, first a first divided surface along which the fist substrate and the second substrate are cut in such a manner that the divided surfaces are in the same plane on the outside of the terminal on the side opposite to the side connected to a functional film. After that, a portion of the first substrate which covers the terminal is removed from the first divided surface of the first substrate as an end piece with a width of 10 mm or less, and thus, a second divided surface is created and the terminal is exposed.

Incidentally, the line along which the substrate is processed is bent even when the substrate is linearly scanned with the laser beam spot in the case where an end piece (cut piece) is removed through a laser scribing process after a mother substrate is initially divided into unit display substrates (liquid crystal display panels).
This is caused by an uneven stress field between the center side and the peripheral side and the scanned line along which the substrate is scanned with a beam spot, because the line along which the substrate is scanned with a beam spot (line along which substrate is to be cut) is in the peripheral region on the unit display substrate (liquid crystal display panel). The created line along which the substrate is processed (scribe line, divided line) is considered to be bent when subjected to the effects of the uneven stress field in the periphery of the unit display substrate.
In addition, the bend in the process line becomes conspicuous as the width of the exposed terminal (width of end piece) becomes smaller.

Therefore, when a terminal is processed through the above described process, first a first scribe line, a second scribe line and a third scribe line are created in a place where a second divided surface is created in the first substrate through a laser scribing process, in a place where a first divided surface is created in the first substrate through a laser scribing process, and in a place where a first divided surface is created in the second substrate through a laser scribing process. At this point in time, the substrates are not yet divided, and therefore, the scribe lines are not drawn in places where the stress field is uneven in the periphery of the substrates, but in regions where the stress field is uniform, and therefore, the scribe lines are straight.
Next, a breaking process is carried out along the second scribe line and the third scribe line, and thus, a first divided surface is created. This breaking process may be a laser breaking process or a mechanical breaking process. As a result, the mother substrate can be divided into unit display substrates, and after that, the first scribe line is located in the periphery of the unit display substrate. Next, a laser breaking process is carried out along the first scribe line, and thus, the end piece is removed through a laser breaking process. At this point in time, the first scribe line is located in the periphery of the unit display substrate, and therefore, an uneven stress field is created. However, a straight first scribe line can be created, along which the crack expands, and therefore, it becomes possible to break the substrate linearly along the first scribe line through a laser breaking process.

### Effects of the Invention

According to the present invention, a terminal having a straight divided surface can be processed even when the terminal width is 10 mm or less. In addition, a laser breaking process can expand the first scribe line (crack with certain depth) in the direction of the depth, and therefore, the substrate can be completely divided without fail, without making division defective. Furthermore, the strength on the end surface from which the end piece is removed can be prevented from lowering.

### (Means for Solving Other Problems and Effects)

In the above described invention, the breaking process carried out on the second scribe line and the third scribe line may be a laser breaking process.
As a result, it becomes unnecessary to use a breaking apparatus for a mechanical breaking process, and the process, from scribing to breaking along the first divided surface, can be carried out using only a laser apparatus. In addition, the number of carets can be reduced.

In the above described invention, the bonded substrate may be conveyed in a semi-finished state after the first divided surface is created and before an end piece is removed, and after that, a laser breaking process may be carried out on the product in a semi-finished state along the second scribe line.
The product in a semi-finished state to which an end piece is attached as a protective cover for the terminal is conveyed, and thus, the terminal can be prevented from being scratched.

### Best Mode for Carrying Out the Invention

The embodiments of the present invention are described below in reference to the drawings. Here, a case where a terminal is processed on a bonded glass substrate G for a liquid crystal display panel is described as an example.

### (Laser Processing Unit)

First, the laser processing unit with which a laser scribing process and a laser breaking process are carried out is described. Here, laser processing is carried out on the two sides of a bonded substrate, and therefore, the substrate is turned over whenever necessary. Therefore, a commercially available robot arm for turning over substrates is installed adjacent to the laser processing unit. The technology for turning over a substrate using the robot arm is a well-known technology, and therefore, description thereof is omitted.
Here, the process for turning over the substrate is unnecessary in the case where a laser processing unit is provided on the front surface side and the rear surface side of the bonded substrate, and therefore, a pair of laser processing units for the front and rear may be installed instead of a robot arm, though description is omitted.

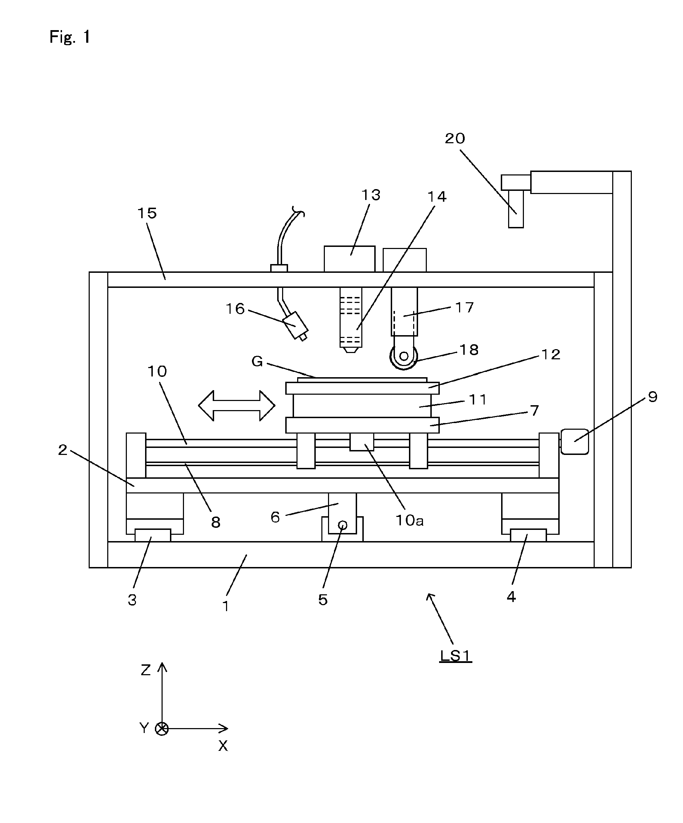

Fig 1 is a schematic diagram showing the configuration of a laser processing unit LS1 used for the method for processing a terminal according to the present invention.

A slide table 2 which slides forward and backward in the direction vertical to the paper in Fig 1 (hereinafter referred to as direction Y) along pair of parallel guide rails 3 and 4 provided on a horizontal support 1. A screw 5 is provided in the direction vertical to the paper, between the two guide rails 3 and 4, and a stay 6 secured to the slide table 2 is engaged with this screw 5 in such a manner that the slide table 2 slides forward and backward in the direction Y along the guide rails 3 and 4 when the screw 5 is rotated forward and backward by a motor (not shown).

A horizontal base 7 is provided on the slide table 2 so as to be slidable forward and backward along the guide rail 8 in the left-right direction in Fig 1 (hereinafter referred to as direction X). A screw 10 which is rotated by a motor 9 penetrates through and is engaged with a stay 10a which is secured to the base 7, and the base 7 slides forward and backward in the direction X along the guide rail 8 when the screw 10a rotates forward and backward.

A rotational table 12 which is rotated by a rotational mechanism 11 is provided on the base 7, and a bonded glass substrate G is horizontally mounted on top of this rotational table 12. This substrate G is a mother substrate which is cut into unit display substrates. The rotational mechanism 11 allows the rotational table 12 to rotate around a vertical axis, and the rotational table can be positioned at any rotational angle. Laser processing becomes possible in two perpendicular directions by rotating the table by 90 ° using the rotational mechanism 11. In addition, the substrate G is secured to the rotational table 12 by means of a suction chuck.

A laser apparatus 13 and an optical holder 14 are held above the rotational table 12 by an attachment frame 15.
An excimer laser, a YAG laser, a carbon dioxide laser or a carbon monoxide laser can be used for the laser apparatus 13. It is preferable to use a carbon dioxide laser which oscillates light having such a wavelength that the efficiency of the glass material in terms of energy absorption is high to process the substrate G.

The laser beam emitted from the laser apparatus 13 passes through the optical holder 14 in which a optical lens system for adjusting the form of the beam is incorporated, so that the substrate G is irradiated with an elliptical beam spot. Though the form of the beam spot is not particularly limited, forms having a long axis, for example elliptical, are excellent in that they make heating efficient along the line along which the substrate is to be processed.

A cooling nozzle 16 is provided on the attachment frame 15, in the vicinity of the optical holder 14. A coolant is jetted out from the cooling nozzle 16. Cooling water, compressed air, an He gas or a carbon dioxide gas can be used for the coolant, but compressed air is jetted in the present embodiment. The cooling medium jetted from the cooling nozzle 16 is directed to a point slightly at a distance from the left end of the beam spot, so that a cooling spot is created on the surface of the substrate G.
The region heated when the beam spot passes by is cooled by the cooling spot, and thus, there is thermal stress along the line along which the substrate is to be processed, so that a crack is created in the substrate.

In addition, a cutter wheel 18 is attached to the attachment frame 15 via a hoisting mechanism 17. This cutter wheel 18 is temporarily lowered when an initial crack is created along a side of the substrate G.

In addition, a camera 20 is mounted in the laser processing unit LS1, so that an alignment mark for positioning the substrate, which is engraved in the substrate G in advance, can be detected. The relationship between the location of the line along which the substrate is to be processed, which is set on the substrate G, and the corresponding location of the rotational table 12 is found from the location of the alignment mark as detected by the camera 20, and thus, positioning becomes possible with precision, so that the cutter wheel 18 can be lowered and the substrate irradiated along the line along which the substrate is to be processed with a laser beam.

### (Steps for Processing Terminal)

Next, the steps for processing the bonded substrate G for a liquid crystal display panel using the laser processing unit LS1 is described.

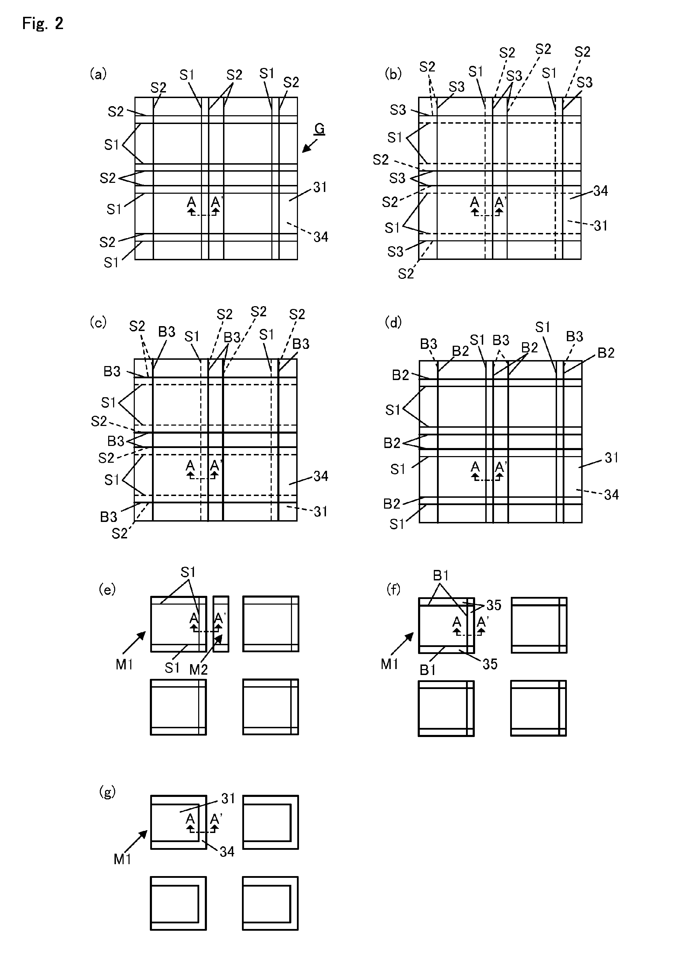

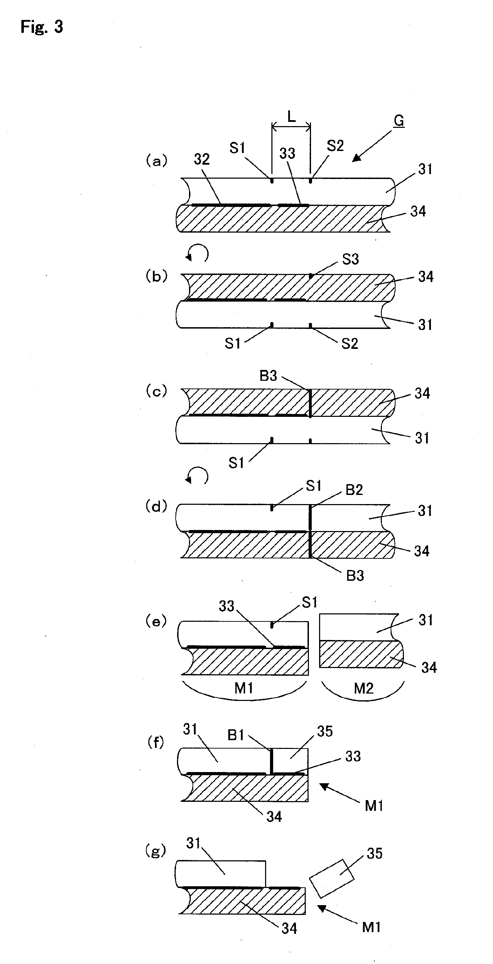

Figs 2(a) to 2(g) are plan diagrams showing the steps for processing a bonded substrate for a liquid crystal display panel. In these figures, from among the indicators, solid indicators are for substrates on the front side and broken indicators are for substrates on the rear side. In addition, Figs 3(a) to 3(g) are cross sectional diagrams along A-A' for Figs 2(a) to 2(g).

As shown in Figs 2(a) and 3(a), a bonded substrate G is formed of a first substrate 31 (CF substrate) on which color filters (CF) are formed, and a second substrate 34 (TFT substrate) on which a TFT 32 and a terminal 33 which is connected to the TFT 32 are formed. The second substrate 34 is positioned so that the surface on which the TFT 32 substrate and the terminal 33 are formed is the inner surface, which is pasted to the first substrate (connecting surface).

First, a first scribe line S1 and the second scribe line S2 are created on the first substrate 31 through a laser scribing process. The first scribe line S1 is in a place along which only one substrate (the first substrate) is divided. The second scribe line S2 is in a place along which the first substrate 31 and the second substrate 34 are completely cut along the same plane, and makes a pair with the below described third scribe line S3.

The first scribe line S1 and the second scribe line S2 are created at a distance L from each other (Figs 3(a) to 3(g)) in a place where the terminal is processed. The distance L is the width for exposure of the terminal 33, and the greater this width is, the smaller the display screen of the liquid crystal display panel becomes, and therefore, cannot be more than 10 mm. Here, the lower limit for the distance L is not particularly limited, as long as it is a width that can be technically processed and allows for connection to an external apparatus without fail, but the width is generally in a range from 1 mm to 10 mm.
The terminal can be processed along at least one side. In the present embodiment, terminals are processed along three sides.

Next, as shown in Figs 2(b) and 3(b), the substrate G is turned over, and a third scribe line S3 is created on the rear surface of the first substrate 31 in the same place as the second scribe line S2. (Here, the first scribe line S1 and the second scribe line S2 may be created after the third scribe line S3 is created in advance.)

Next, as shown in Figs 2(c) and 3(c), a laser breaking process for reheating the substrate along the third scribe line S3 is carried out, so that the crack (third scribe lines S3) expands and reaches the rear, due to the thermal stress, and thus, a divided surface B3 is created.

Next, as shown in Figs 2(d) and 3(d), the substrate G is turned over and a laser breaking process for reheating the substrate along the second scribe line S2 is carried out, so that the crack (second scribe lines S2) expands and reaches the rear, due to the thermal stress, and thus, a divided surface B2 is created.

As shown in Figs 2(e) and 3(e), as a result of the process up to that point, the substrate G is cut along the first divided surface made up of the divided surface B2 and the divided surface B3, so that a unit display substrate M1 is cut out from the remaining substrate M2. Here, though the remaining substrate M2 is an unnecessary portion provided between unit display substrates, and disposed of in the present embodiment, the substrate G can be used more effectively and with less waste in the case where unit display substrates M1 are provided adjacent to each other, without the substrate M2, which is an unnecessary portion.

Next, as shown in Figs 2(f) and 3(f), a laser breaking process for reheating the substrate along the first scribe line S1 is carried out, so that the crack (first scribe lines S1) expands and reaches the rear, due to the thermal stress, and thus, a divided surface B1 is created.
At this time, the divided surface B1 is located within 10 mm of the previously created divided surface B2, and thus, the distribution of stress becomes structurally asymmetrical between the left and right of the first scribe line S1. Furthermore, the thermal stress applied in this portion during reheating is distributed asymmetrically between the left and right of the first scribe lines S1. Accordingly, the crack bends in the case where the direction in which the crack expands is determined only by the gradient of the stress applied to the substrate. However, the first scribe line S1 is created in advance, and therefore, the crack can expand along this scribe line S1. As a result, the divided surface B1 is linearly created along the firs scribe line S1, and does not bend.

Next, as shown in Figs 2(g) and 3(g), the end portion 35 is removed, and a unit display substrate M1 on which a terminal is processed is gained.
Excellent terminal processing becomes possible through the above described steps for processing.

In the above described steps for processing, the unit display substrate M1, which is separated in the step in Figs 2(e) and 3(e), may be removed in a semi-finished state and transported to another location within the same factory, or to another factory, and thus, a laser breaking process may be carried out using a second laser processing unit LS2 (which may have the same specifications and performance as the laser processing unit LS1), which is in a different location from the laser processing unit LS1 initially used for the laser scribing process. In this case, the terminal 33 is covered with the first substrate 31 (end portion 35), and thus protected during transportation, and not scratched.

### Industrial Applicability

The method for processing a terminal according to the present invention can be applied to processes for a terminal in brittle material substrates, for example glass substrates.

### Brief Description of the Drawings

Fig 1 is a schematic diagram showing the configuration of the laser processing unit used in the method for processing a terminal according to the present invention;
Figs 2(a) to 2(g) are plan diagrams illustrating the steps in the process using the method for processing a terminal according to the present invention;
Figs 3(a) to 3(g) are cross sectional diagrams along A-A' in Figs 2(a) to 2(g);
Figs 4(a) to 4(g) are diagrams showing an example of the steps in the processing using a conventional method for processing a terminal;
Fig 5 is a diagram showing an example of the bend moment type breaking unit used in conventional processes for a terminal; and
Fig 6 is a diagram showing an example of the shearing type breaking unit used in conventional processes for a terminal.

### Explanation of Symbols

- 2: sliding table
- 7: support
- 12: rotational table
- 31: first substrate (CF substrate)
- 32: functional film (TFT)
- 33: terminal
- 34: second substrate (TFT substrate)
- 35: end piece
- S1: first scribe line
- S2: second scribe line
- S3: third scribe line
- B1: second divided surface
- B2, B3: first divided surface
To provide a method for processing a terminal through a laser breaking process according to which processing is carried out along a line, not a curve, even when the exposed width is small, so that the terminal can be processed without fail.

Means for Achieving Object In a method for processing a terminal in a bonded substrate according to which a first divided surface B2, B3 is created in a first substrate 31 and a second substrate 34, so that the cut surfaces are in the same plane, and after that, the portion of the first substrate which covers a terminal 33 is removed from the first divided surface of the first substrate as an end piece 35 with a width of 10 mm or less, so that a second divided surface B1 is created and the terminal is exposed, a first scribe line S1, a second scribe line S2 and a third scribe line S3 are created through a laser scribing process, and then, a breaking process is carried out along the second scribe line S2 and the third scribe line S3, so that the first divided surface B2, B3 is created, and then, a laser breaking process is carried out along the first scribe line S1 and the end piece 35 is removed.

## Claims

1. A method for processing a terminal in a bonded substrate having a structure where a first brittle material substrate and a second brittle material substrate on one side of which a terminal connected to a functional film is formed together with said functional film are pasted together in such a manner that said terminal and said functional film are covered with the first substrate, according to which
a first divided surface along which the first substrate and the second substrate are cut is created on the outside of the terminal on the side opposite to the side of the terminal which is connected to said functional film; and
after that, a second divided surface is created by removing a portion of the first substrate which covers said terminal as an end piece with a width of 10 mm or less from the first divided surface of said first substrate so that said terminal is exposed, comprising the steps of:
creating a first scribe line, a second scribe line and a third scribe line through a laser scribing process in places where the second divided surface is created in the first substrate, the first divided surface is created in the first substrate, and the first divided surface is created in the second substrate, respectively;
next, carrying out a breaking process along the second scribe line and the third scribe line so that the first divided surface is created; and
next, carrying out a laser breaking process along the first scribe line so that said end piece is removed, and thus, the terminal is exposed.

2. The method for processing a terminal in a bonded substrate according to Claim 1, wherein the breaking process carried out on the second scribe line and the third scribe line is a laser breaking process.

3. The method for processing a terminal in a bonded substrate according to Claim 1 or 2, wherein a bonded substrate is conveyed in a half-finished state before said end piece is removed, after the first divided surface is created, and after that, a laser breaking process is carried out on the first scribe line in said half-finished substrate.
